# FASCICULE DE BREVET EUROPEEN

(11) **EP 3 006 713 B1**
(45) Date de publication et mention de la délivrance du brevet: **31.10.2018**
(21) Numéro de dépôt: 15185106.0
(22) Date de dépôt: 14.09.2015
(51) Int. Cl.: F04D 19/02, F02C 3/067, F02C 3/107, F02K 3/06, F04D 29/059

(54) **COMPRESSEUR DE TURBOMACHINE AXIALE AVEC ROTOR CONTRAROTATIF**
KOMPRESSOR EINER AXIALEN TURBOMASCHINE MIT GEGENLÄUFIGEM ROTOR
COMPRESSOR OF AXIAL TURBINE ENGINE WITH CONTRA-ROTATING ROTOR

(30) Priorité: 09.10.2014 BE 201400740
(43) Date de publication de la demande: 13.04.2016
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- EP-A2- 1 921 290
- EP-A2- 2 270 315
- FR-A1- 2 217 545
- US-A- 3 673 802
- US-A1- 2008 120 839

## Description

### Domaine technique

L'invention a trait à une turbomachine axiale munie d'une transmission. Plus précisément, l'invention a trait à un turboréacteur comprenant une soufflante, un compresseur et un train épicycloïdal.

### Technique antérieure

Afin de moduler la vitesse de rotation de sa soufflante, un turboréacteur est doté d'un train épicycloïdal. Il permet de découpler le rotor du compresseur basse pression de la soufflante, ce qui permet de se libérer de contraintes technologiques. La vitesse de rotation de la soufflante diminue par rapport au rotor du compresseur, ce qui est avantageux pour les turbomachines ayant un grand taux de dilution en combinant une grande soufflante et un compresseur de diamètre réduit. Cette technologie devient intéressante pour les compresseurs hautes vitesses, dont la vitesse de rotation est supérieure à 10 000 tr/min, voir supérieure à 15 000 tr/min.

La présence d'un réducteur épicycloïdal permet en outre de rendre contrarotatives certaines rangées d'aubes rotoriques, c'est-à-dire tournant dans des sens inverses. Ce choix permet d'augmenter le taux de compression du compresseur.

Le document US 2010/0326050 A1 divulgue une turbomachine axiale dotée, d'amont en aval, d'une soufflante, d'un compresseur basse pression, d'un compresseur haute pression, de turbines reliées aux compresseurs et à la soufflante. Un réducteur épicycloïdal relie la soufflante au rotor interne du compresseur basse pression, ces entités tournant dans des sens opposés ; à des vitesses différentes en raison du rapport de réduction. Cependant, une telle turbomachine est particulièrement complexe. Elle présente nombre d'interfaces en mouvement les unes par rapport aux autres, ce qui implique de prévoir autant de joints d'étanchéité ou de paliers pour limiter l'usure. Cet agencement est lourd et volumineux, la précision de fabrication devient onéreuse. Cette configuration oblige d'ajouter des paliers ou roulements entre certaines parties mobiles.

Le document US 2008/120839 A1 divulgue un turboréacteur comprenant une soufflante, un rotor avec une rangée d'aubes, et un réducteur épicycloïdal entrainant ladite rangée d'aubes en sens inverse de la soufflante. Une rangée d'aubes de stator est disposée en aval de la rangée d'aubes du rotor.

Le document US 3 673 802 A divulgue un turboréacteur incluant une soufflante, un rotor et un réducteur épicycloïdal. Le rotor comprend deux rangées d'aubes tournant dans le sens de la soufflante, et deux autres rangées d'aubes tournant dans l'autre sens grâce au réducteur épicycloïdal.

### Résumé de l'invention

### Problème technique

L'invention a pour objectif de résoudre au moins un des problèmes posés par l'art antérieur. L'invention a également pour objectif d'améliorer le rendement d'une turbomachine avec une soufflante reliée à un compresseur via un réducteur épicycloïdal. Plus précisément, l'invention a pour objectif d'optimiser le taux de compression et la compacité d'un compresseur.

### Solution technique

L'invention a également pour objet une turbomachine axiale, tel un turboréacteur, comprenant une soufflante, un compresseur muni d'un rotor avec au moins deux rangées annulaires d'aubes rotoriques dont deux rangées contrarotatives, un réducteur épicycloïdal reliant la soufflante au rotor du compresseur et reliant les rangées contrarotatives, remarquable en ce qu'elle comprend en outre une rangée annulaire d'aubes statoriques disposée entre deux rangées d'aubes rotoriques de sorte à redresser le flux entre lesdites deux rangées d'aubes rotoriques.

Selon un mode avantageux de l'invention, les aubes statoriques de la rangée annulaire disposée entre lesdites deux rangées d'aubes rotoriques sont cambrées, elles comprennent préférentiellement des profils cambrés.

Selon un mode avantageux de l'invention, la rangée d'aubes statoriques est disposée en aval des deux rangées d'aubes rotoriques contrarotatives, qui sont éventuellement deux rangées successives.

Selon un mode avantageux de l'invention, le réducteur épicycloïdal comprend un planétaire extérieur, un planétaire intérieur et un porte-satellite solidaire du stator de la turbomachine, l'une des deux rangées contrarotatives étant fixée au planétaire extérieur et l'autre des deux rangées contrarotatives étant fixée au planétaire intérieur.

Selon un mode avantageux de l'invention, chaque aube rotorique est reliée au rotor via son extrémité interne, éventuellement la rangée d'aubes statoriques est une première rangée, le compresseur comprenant en outre une deuxième rangée d'aubes statoriques, les rangées d'aubes contrarotatives étant disposées entre la première rangée statorique et la deuxième rangée statorique.

Selon un mode avantageux de l'invention, le réducteur épicycloïdal comprend un porte-satellite avec une portion amont fixée au stator de la turbomachine, préférentiellement le réducteur épicycloïdal est inscrit à l'intérieur des aubes du rotor du compresseur.

Selon un mode avantageux de l'invention, parmi les deux rangées d'aubes contrarotatives, celle en amont présente des aubes plus grandes radialement que celle en aval.

Selon un mode avantageux de l'invention, le réducteur épicycloïdal est configuré de sorte à ce que la rangée d'aubes rotoriques la plus en amont du compresseur soit celle qui tourne moins vite.

Selon un mode avantageux de l'invention, la rangée contrarotative disposée le plus proche axialement de la soufflante tourne à une vitesse intermédiaire par rapport à la vitesse de rotation de la soufflante et de l'autre des deux rangées contrarotatives.

Selon un mode avantageux de l'invention, le rotor comprend un disque aubagé et un tambour aubagé, le disque supporte une rangée d'aubes et le tambour supporte au moins deux rangées d'aubes, le disque et le tambour supportent chacun l'une des rangées d'aubes contrarotatives, préférentiellement le disque est disposé en amont du tambour.

Selon un mode avantageux de l'invention, les deux rangées d'aubes rotoriques entre lesquelles est disposée la rangée annulaire d'aubes statoriques sont les au moins deux rangées d'aubes supportées par le tambour.

Selon un mode avantageux de l'invention, le compresseur comprend plusieurs rangées d'aubes dont une rangée amont et une rangée aval à ses extrémités qui sont des rangées d'aubes statoriques, éventuellement le compresseur est un compresseur basse pression.

Selon un mode avantageux de l'invention, le compresseur comprend au moins trois rangées d'aubes rotoriques, dont au moins deux rangées qui sont solidaires l'une de l'autre.

Selon un mode avantageux de l'invention, la turbomachine comprend un carter de fixation de la soufflante avec au moins une, préférentiellement au moins deux rangées de bras de carter traversant un flux primaire de la turbomachine, le compresseur étant disposé en aval d'une des rangées de bras de carter ou entre les deux rangées de bras de carter.

Selon un mode avantageux de l'invention, le réducteur épicycloïdal comprend un planétaire extérieur sur lequel est fixée l'une des deux rangées contrarotatives, et un planétaire intérieur sur lequel est fixée l'autre des deux rangées contrarotatives et éventuellement la soufflante.

Selon un mode avantageux de l'invention, le réducteur épicycloïdal est un premier réducteur avec un premier planétaire extérieur, la turbomachine comprenant en outre un deuxième réducteur épicycloïdal avec un deuxième planétaire extérieur ; la soufflante étant fixée au deuxième planétaires extérieurs, l'une des deux rangées d'aubes contrarotatives étant fixée au premier planétaire extérieur.

Selon un mode avantageux de l'invention, les réducteurs épicycloïdaux comprennent chacun un planétaire intérieur et un porte-satellite, les porte-satellites étant fixés au stator de la turbomachine, et les planétaires intérieurs étant solidaires, éventuellement fixés l'un à l'autre.

Selon un mode avantageux de l'invention, la turbomachine comprend une réduction entre la soufflante et le ou les réducteurs épicycloïdaux de la turbomachine, la réduction étant configurée de sorte à réduire la vitesse de rotation de la soufflante par rapport au rotor du compresseur.

Selon un mode avantageux de l'invention, les bras de carter sont plus longs selon l'écoulement du flux, que hauts perpendiculairement à l'écoulement.

Selon un mode avantageux de l'invention, la turbomachine comprend des étanchéités au niveau, radialement, des extrémités internes des aubes rotoriques.

Selon un mode avantageux de l'invention, chaque rangée d'aubes du compresseur comprend plus de vingt aubes, préférentiellement plus de cinquante aubes, plus préférentiellement plus de cent aubes.

Selon un mode avantageux de l'invention, chaque aube du compresseur comprend une surface incurvée.

Selon un mode avantageux de l'invention, chaque ou au moins un réducteur épicycloïdal comprend deux planétaires intérieurs ou deux planétaires extérieurs.

Selon un mode avantageux de l'invention, la turbomachine comprend au moins trois trains épicycloïdaux en cascade, tels au moins trois réducteurs épicycloïdaux.

Selon un mode avantageux de l'invention, le compresseur comprend au moins six rangées d'aubes, dont au moins trois rangées statoriques et au moins trois rangées rotoriques.

Selon un mode avantageux de l'invention, les deux rangées contrarotatives et deux rangées statoriques forment une succession de quatre rangées successives.

Selon un mode avantageux de l'invention, la turbomachine comprend une turbine entraînant le compresseur via un arbre de transmission.

Selon un mode avantageux de l'invention, chaque élément de réducteur épicycloïdal présente un axe de rotation fixe par rapport au stator de la turbomachine.

### Avantages apportés

L'invention permet de limiter les turbulences dans un compresseur avec des rangées d'aubes contrarotatives, ce qui améliore le rendement. La construction hybride reste simple car l'invention tire profit de la présence du planétaire externe du réducteur pour y ancrer une rangée d'aubes rotoriques. De la sorte, cette rangée d'aubes tourne moins vite que les rangées aval, et améliore la progressivité de la compression du flux.

L'architecture proposée est simple, le nombre de roulements et de joints d'étanchéité reste limité. Cette configuration forme un compresseur mixte, présentant à la fois des rangées d'aubes contrarotatives, et des rangées statoriques, ce qui peut permettre d'économiser une rangée statorique. La présente solution optimise à la fois la compacité, la masse et la fiabilité. Le compresseur est raccourci, la trainée de la turbomachine s'amenuise.

### Brève description des dessins

La figure 1 représente une turbomachine axiale selon l'invention.
La figure 2 esquisse une portion amont de turbomachine axiale selon un premier mode de réalisation de l'invention.
La figure 3 illustre une portion amont de turbomachine axiale suivant un deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale.

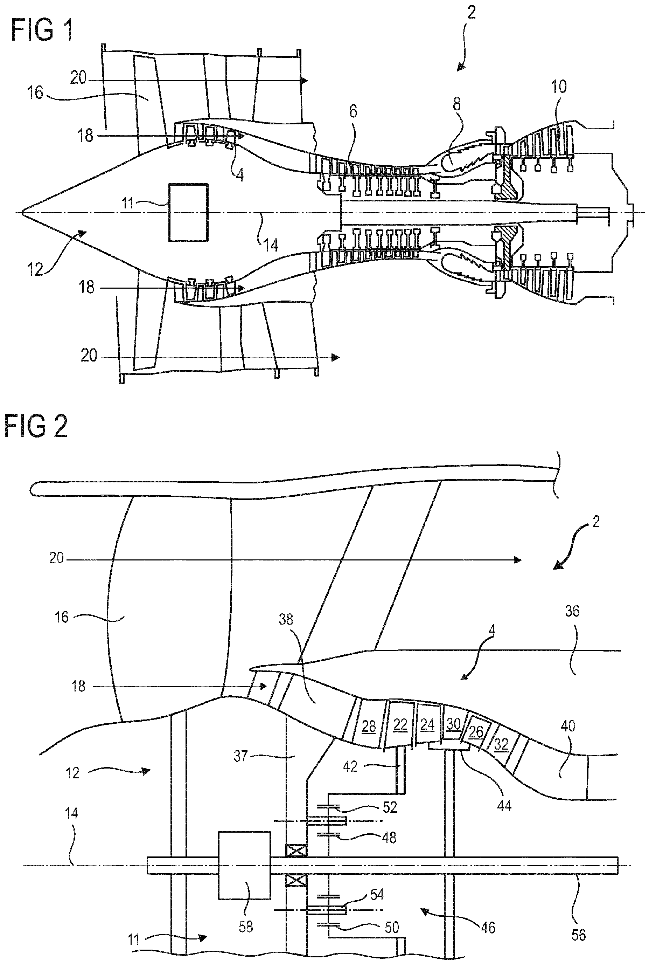

La figure 1 représente de manière simplifiée une turbomachine axiale. Il s'agit dans ce cas précis d'un turboréacteur double-flux, il pourrait également s'agir d'un turbopropulseur. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6 via au moins un arbre de transmission. Une transmission 11 peut augmenter ou réduire la vitesse de rotation des compresseurs par rapport à la turbine. Ou encore, les différents étages de turbines peuvent chacun être reliés aux étages de compresseur via des arbres concentriques, éventuellement via la transmission 11. Les compresseurs comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire 18 en sortie de turbine. Le flux secondaire 20 génère une réaction de poussée grâce à son accélération, principalement par la soufflante. Les flux primaire 18 et secondaire 20 sont des flux annulaires, ils sont canalisés par le carter de la turbomachine.

La figure 2 est une vue en coupe d'une portion amont d'une turbomachine axiale 2 telle que celle de la figure 1. Le compresseur basse-pression 4, la soufflante 16, et une transmission 11 sont représentés. Le rotor 12 comprend plusieurs rangées annulaires d'aubes rotoriques (22 ; 24 ; 26), en l'occurrence trois.

Le compresseur basse pression 4 comprend plusieurs redresseurs, en l'occurrence trois, qui contiennent chacun une rangée annulaire d'aubes statoriques (28 ; 30 ; 32). Les redresseurs sont solidaires du stator 36 de la turbomachine 2, ils sont associés au fan 16 ou aux rangées d'aubes rotoriques (22 ; 24 ; 26) pour redresser le flux d'air, de sorte à convertir la vitesse du flux en pression. Les aubes statoriques (28 ; 30 ; 32) s'étendent essentiellement radialement depuis un carter extérieur, et peuvent y être fixées à l'aide d'un axe ou soudées, elles peuvent en outre être fixées à des viroles internes. Elles sont plus hautes radialement que longues axialement, ces dimensions pouvant être appréciées selon le sens d'écoulement du flux primaire 18.

Les aubes présentent chacune un empilement de profils cambrés. Elles présentent chacune une surface intrados et une surface extrados qui est plus étendue que la surface intrados. Chacune des aubes statoriques (28 ; 30 ; 32) présente un bord d'attaque et un bord de fuite qui est moins incliné par rapport à l'écoulement que le bord d'attaque. Les aubes rotoriques (22 ; 24 ; 26) présentent un agencement inverse. Ainsi, chaque aube statorique (28 ; 30 ; 32) redresse le flux, en déviant la composante circonférentielle du flux en une composante axiale. Les aubes rotoriques (22; 24; 26) sont fixées via leurs extrémités internes, leurs extrémités externes sont libres et peuvent faire face à la surface interne de la paroi du carter du compresseur. Des joints dynamiques, tels des couches d'abradable, coopèrent avec les extrémités externes des aubes.

Le stator 36 de la turbomachine 2 comprend un carter de fixation 37 de soufflante avec des bras de carter 38 disposés en amont du compresseur basse pression 4. Le carter 37 permet de relier la soufflante 36 à la nacelle. La turbomachine 2 montre par ailleurs d'autres bras de carter 40 disposés en aval du compresseur basse pression 4. Chaque jeu de bras (38; 40) forme une rangée annulaire, et chaque bras traverse le flux primaire 18. Les bras (38 ; 40) sont essentiellement allongés axialement, et sont au moins deux fois, préférentiellement au moins quatre fois plus long axialement que les aubes statoriques (28 ; 30 ; 32).

Le compresseur 4 peut comprendre, d'amont vers l'aval, une rangée d'aubes statoriques amont 28, deux rangées d'aubes rotoriques successives (22 ; 24), une rangée d'aubes statoriques 30, une rangée d'aubes rotoriques 26 puis une rangée d'aubes statoriques aval 32. On remarque que quatre rangées d'aubes (24; 30 ; 26; 32) forment une alternance rotorique/statorique, mais il est possible que cette alternance se prolonge sur cinq, six, sept, huit ou davantage de rangées d'aubes. Par ailleurs, les deux rangées rotatives (22 ; 24) successives, et/ou les deux rangées rotatives (22; 24) les plus en amont, sont contrarotatives et tournent dans des sens opposés. La première rangée d'aubes rotoriques 22, ou rangée amont 22, est disposée sur un disque 42. La deuxième 24 et la troisième 26 rangée d'aubes rotoriques sont liées l'une à l'autre par un tambour 44 présentant une portion généralement tubulaire. De la sorte, ces deux rangées (24 ; 26) sont solidaires l'une de l'autre et mues par un même mouvement de rotation.

La transmission 11 peut comprendre au moins un train épicycloïdal 46 tel un réducteur épicycloïdal 46. Elle peut comprendre au moins deux, au moins trois ou davantage de trains épicycloïdaux en cascade. Un train épicycloïdal ou un réducteur épicycloïdal sont bien connus de l'homme du métier. Il comporte généralement un planétaire interne 48, un planétaire externe 50, un ou plusieurs satellites 52 qui engrènent avec les planétaires (48 ; 50), un porte-satellite 54 permettant de relier chaque satellite 52 à un arbre de transmission 56 ou au stator 36 de la turbomachine 2. Les planétaires (48 ; 50) sont concentriques, l'un d'eux pouvant être lié au stator 36, ou les deux peuvant être rotatifs et liés à des arbres de transmission.

Dans le cas présent, la soufflante 16 et une portion aval du rotor 12 du compresseur 4 sont solidaires du planétaire interne 48. De la sorte, elles tournent dans le même sens et à la même vitesse. Le porte-satellite 54 est fixé au stator 36. Plus précisément, il comprend des axes sur lesquels sont montés de manière tournants les satellites ; les extrémités amont desdits axes étant fixées au carter de fixation 37 de la turbomachine 2. La rangée amont d'aubes rotoriques 22 du compresseur 4 est reliée au planétaire externe 50. Elle tourne dans le sens inverse et à une vitesse inférieure aux rangées rotoriques (24; 26) du compresseur situées en aval. Le planétaire extérieur 50 est monté tournant sur l'arbre de transmission 56 auquel le planétaire intérieur 48 est fixé, ils sont reliés l'un à l'autre par des liaisons pivots tel des paliers.

Optionnellement, la transmission peut comprendre une réduction 58 entre la soufflante 16 et le réducteur épicycloïdal 46, par exemple reliée au planétaire interne 48. Cette réduction peut comprendre des engrenages, et/ou la soufflante peut être excentrée par rapport à l'axe de rotation 14. Par ce biais, il est possible de diminuer la vitesse de rotation de la soufflante 16 par rapport à la rangée rotorique amont 22 du compresseur 4. Ainsi, la rangée rotorique amont 22 présente une vitesse de rotation intermédiaire par rapport à la rangée rotorique 24 disposée en aval et par rapport à la soufflante 16.

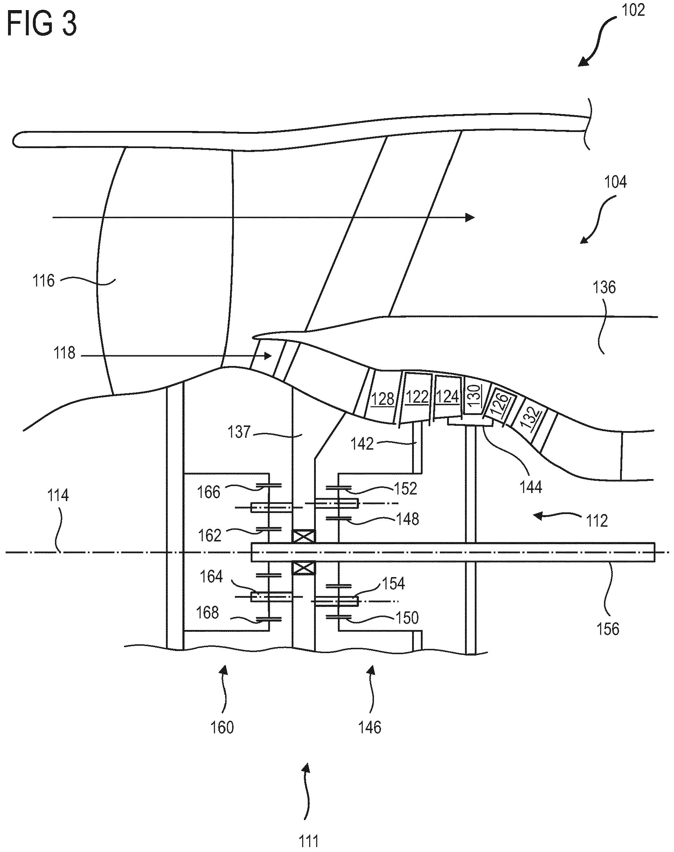

La figure 3 représente une portion amont de turbomachine 102 selon un deuxième mode de réalisation de l'invention. Cette figure 3 reprend la numérotation des figures précédentes pour les éléments identiques ou similaires, la numération étant toutefois incrémentée de 100. Des numéros spécifiques sont utilisés pour les éléments spécifiques à ce mode de réalisation.

Cette figure 3 est similaire à la figure 2, elles diffèrent essentiellement au niveau de la transmission 111. La transmission 111 comprend au moins deux trains épicycloïdaux (146; 160) tels des réducteurs épicycloïdaux (146; 160), un aval 146 et un amont 160 ; ou respectivement un premier 146 et un deuxième 160. Chaque réducteur comprend un planétaire interne (148 ; 162), un porte-satellite (154 ; 164) avec des satellites (152 ; 166), et un planétaire externe (150 ; 168) entraîné par le planétaire interne (148; 162) à l'aide des satellites (152; 166). Les porte-satellites (154; 164) sont fixés au carter de fixation 137, ils sont donc solidaires. De même, les planétaires internes (148 ; 162) peuvent être solidaires l'un de l'autre. En revanche, les planétaires externes (150 ; 168) sont découplés. Le planétaire externe 168 du réducteur amont 160 est fixé à la soufflante 116, celui du réducteur aval 146 est fixé à la rangée d'aubes rotoriques amont 122. Une portion du rotor, avec la deuxième et la troisième rangée d'aubes rotoriques, est fixée à l'arbre de transmission 156 qui est entraîné par une turbine.

Grâce à cet agencement, la première rangée rotorique 122, ou rangée d'aubes rotoriques amont 122, tourne dans un sens inverse au sens de rotation de la deuxième 124 et de la troisième 126 rangée d'aubes rotoriques. Elle tourne dans le même sens que la soufflante 116. Un gain de compression est atteint dans un espace réduit axialement. De plus, la vitesse de rotation de la première rangée rotorique 122, via le disque 142, est un intermédiaire entre la vitesse de rotation de la soufflante et la vitesse de rotation de la deuxième 124 et de la troisième 126 rangée. Ce bénéfice offre l'avantage de s'adapter à une vitesse de rotation réduite de la soufflante, et d'augmenter progressivement la vitesse de rotation vers l'aval, pour comprimer encore plus progressivement le flux primaire 118.

Les réducteurs épicycloïdaux (146; 160) présentent des rapports de réductions différents, de préférence, le réducteur amont 160 présente un rapport de démultiplication supérieur à celui du réducteur aval 146. Les dimensions peuvent être adaptées pour pouvoir les intégrer à l'intérieur du compresseur, notamment pour les inscrire à l'intérieur du tambour 144 du rotor 112 du compresseur 104.

La présente figure présente un réducteur à deux réducteurs épicycloïdaux, il est éventuellement possible d'en prévoir davantage ; tout comme il est possible de relier l'un des porte-satellites à un planétaire interne ou externe. Chaque satellite d'un des réducteurs peut être solidaire d'un satellite d'un autre réducteur, un seul planétaire interne entraînant les satellites et donc les planétaires externes à des vitesses de rotation différentes.

## Revendications

1. Turbomachine (2; 102) axiale, tel un turboréacteur, comprenant une soufflante (16; 116), un compresseur (4 ; 6 ; 104) muni d'un rotor (12; 112) avec au moins deux rangées annulaires d'aubes rotoriques (22 ; 24 ; 26 ; 122 ; 124 ; 126) dont deux rangées contrarotatives (22; 24; 122; 124), un réducteur épicycloïdal (46; 146; 160) reliant la soufflante au rotor du compresseur et reliant les rangées contrarotatives (22 ; 24 ; 122 ; 124),
une rangée annulaire d'aubes statoriques (30 ; 130) disposée entre deux rangées d'aubes rotoriques (24 ; 26; 124 ; 126) de sorte à redresser le flux entre lesdites deux rangées d'aubes rotoriques (24 ; 26 ; 124 ; 126) **caractérisée en ce que**
chaque aube rotorique (22; 24; 26; 122; 124; 126) est reliée au rotor via son extrémité interne.

2. Turbomachine (2; 102) selon la revendication 1, **caractérisée en ce que** la rangée d'aubes statoriques (30 ; 130) est disposée en aval des deux rangées d'aubes rotoriques contrarotatives (24; 26; 124; 126), qui sont éventuellement deux rangées successives.

3. Turbomachine (2; 102) selon l'une des revendications 1 à 2, **caractérisée en ce que** le réducteur épicycloïdal (46; 146; 160) comprend un planétaire extérieur (50; 150 ; 168), un planétaire intérieur (48; 148; 162) et un porte-satellite (54 ; 154 ; 164) solidaire du stator (36 ; 136) de la turbomachine, l'une des deux rangées contrarotatives (22 ; 122) étant fixée au planétaire extérieur (50 ; 150) et l'autre des deux rangées contrarotatives (24 ; 124) étant fixée au planétaire intérieur (48; 148).

4. Turbomachine (2; 102) selon l'une des revendications 1 à 3, **caractérisée en ce que** la rangée d'aubes statoriques (30; 130) est une première rangée, le compresseur (4; 6; 104) comprenant en outre une deuxième rangée d'aubes statoriques (28; 128), les rangées d'aubes contrarotatives (22; 24; 122; 124) étant disposées entre la première rangée statorique et la deuxième rangée statorique.

5. Turbomachine (2 ; 102) selon l'une des revendications 1 à 4, **caractérisée en ce que** le réducteur épicycloïdal (46; 146 ; 160) comprend un porte-satellite (54 ; 154) avec une portion amont fixée au stator (36; 136) de la turbomachine (2 ; 102), préférentiellement le réducteur épicycloïdal est inscrit à l'intérieur des aubes du rotor du compresseur (4 ; 104).

6. Turbomachine (2 ; 102) selon l'une des revendications 1 à 5, **caractérisée en ce que** parmi les deux rangées d'aubes contrarotatives (22; 24; 122; 124), celle en amont présente des aubes (22; 122) plus grandes radialement que celles en aval (24 ; 124).

7. Turbomachine (2 ; 102) selon l'une des revendications 1 à 6, **caractérisée en ce que** le réducteur épicycloïdal (46; 146; 160) est configuré de sorte à ce que la rangée d'aubes rotoriques (22 ; 122) la plus en amont du compresseur (4 ; 104) soit celle qui tourne moins vite.

8. Turbomachine (2; 102) selon l'une des revendications 1 à 7, **caractérisée en ce que** le rotor (12; 112) comprend un disque aubagé (42; 142) et un tambour aubagé (44; 144), le disque (42; 142) supportant une rangée d'aubes (22; 122) et le tambour supporte au moins deux rangées d'aubes (24; 26; 124; 126), le disque (42; 142) et le tambour (44; 144) supportent chacun l'une des rangées d'aubes contrarotatives (22; 24; 122; 124), préférentiellement le disque est disposé en amont du tambour.

9. Turbomachine (2 ; 102) selon la revendication 8, **caractérisée en ce que** les deux rangées d'aubes rotoriques (24; 26; 124; 126) entre lesquelles est disposée la rangée annulaire d'aubes statoriques (30 ; 130) sont les au moins deux rangées d'aubes supportées par le tambour (44 ; 144).

10. Turbomachine (2; 102) selon l'une des revendications 1 à 9, **caractérisée en ce que** le compresseur (4; 104) comprend plusieurs rangées d'aubes dont une rangée amont (28; 128) et une rangée aval (32; 132) à ses extrémités qui sont des rangées d'aubes statoriques, éventuellement le compresseur est un compresseur basse pression.

11. Turbomachine (2 ; 102) selon l'une des revendications 1 à 10, **caractérisée en ce que** le compresseur comprend au moins trois rangées d'aubes rotoriques (22; 24; 26; 122 ; 124; 126), dont au moins deux rangées (24; 26; 124; 126) qui sont solidaires l'une de l'autre.

12. Turbomachine (2 ; 102) selon l'une des revendications 1 à 11, **caractérisée en ce qu'**elle comprend un carter de fixation (37; 137) de la soufflante avec au moins une, préférentiellement au moins deux rangées de bras de carter (38 ; 40) traversant un flux primaire (18; 118) de la turbomachine (2; 102), le compresseur étant disposé en aval d'une des rangées de bras de carter ou entre les deux rangées de bras de carter.

13. Turbomachine (2) selon l'une des revendications 1 à 12, **caractérisée en ce que** le réducteur épicycloïdal (46) comprend un planétaire extérieur (50) sur lequel est fixée l'une des deux rangées contrarotatives (22), et un planétaire intérieur (48) sur lequel sont fixées l'autre des deux rangées contrarotatives et éventuellement la soufflante (16).

14. Turbomachine (102) selon l'une des revendications 1 à 12, **caractérisée en ce que** le réducteur épicycloïdal (146) est un premier réducteur avec un premier planétaire extérieur (150), la turbomachine comprenant en outre un deuxième réducteur épicycloïdal (160) avec un deuxième planétaire extérieur (168); la soufflante (116) étant fixée au deuxième planétaire extérieur (168), l'une des deux rangées d'aubes contrarotatives (122) étant fixée au premier planétaire extérieur (150).

15. Turbomachine (102) selon la revendication 14, **caractérisée en ce que** les réducteurs épicycloïdaux (146; 160) comprennent chacun un planétaire intérieur (148; 162) et un porte-satellite (154; 164), les porte-satellites étant fixés au stator (137) de la turbomachine (102), et les planétaires intérieurs (148; 162) étant solidaires, éventuellement fixés l'un à l'autre.

## Patentansprüche

1. Axiale Turbomaschine (2; 102), wie etwa ein Turbostrahltriebwerk, umfassend ein Gebläse (16; 116), einen Verdichter (4; 6; 104), der mit einem Rotor (12; 112) mit mindestens zwei ringförmigen Reihen von Rotorschaufeln (22; 24; 26; 122; 124; 126) versehen ist, wovon zwei Reihen gegenläufig rotierend sind (22; 24; 122; 124), ein epizyklisches Untersetzungsgetriebe (46; 146; 160), welches das Gebläse mit dem Verdichterrotor verbindet und die gegenläufigen Reihen (22; 24; 122; 124) verbindet, eine ringförmige Reihe von Statorschaufeln (30; 130), die zwischen zwei Reihen von Rotorschaufeln (24; 26; 124; 126) angeordnet sind, um den Strom zwischen den zwei Reihen von Rotorschaufeln (24; 26; 124; 126) zu begradigen,
**dadurch gekennzeichnet, dass**
jede Rotorschaufel (22; 24; 26; 122; 124; 126) mittels ihres inneren Endes mit dem Rotor verbunden ist.

2. Turbomaschine (2; 102) nach Anspruch 1, **dadurch gekennzeichnet, dass** die Reihe von Statorschaufeln (30; 130) stromabwärts von den zwei gegenläufigen Reihen von Rotorschaufeln (24; 26; 124; 126), die zwei aufeinanderfolgende Reihen sein können, angeordnet ist.

3. Turbomaschine (2; 102) nach einem der Ansprüche 1 bis 2, **dadurch gekennzeichnet, dass** das epizyklische Untersetzungsgetriebe (46; 146; 160) ein äußeres Planetenrad (50; 150; 168), ein inneres Planetenrad (48; 148; 162) und einen Satellitenträger (54; 154; 164), am Stator (36; 136) der Turbomaschine befestigt, umfasst, wobei die eine der zwei gegenläufigen Reihen (22, 122) an dem äußeren Planetenrad (50; 150) befestigt ist und die andere der zwei gegenläufigen Reihen (24; 124) an dem inneren Planetenrad (48; 148) befestigt ist.

4. Turbomaschine (2; 102) nach einem der Ansprüche 1 bis 3, **dadurch gekennzeichnet, dass** die Reihe von Statorschaufeln (30; 130) eine erste Reihe ist, wobei der Verdichter (4; 6; 104) auch eine zweite Reihe von Statorschaufeln (28; 128) umfasst, wobei die gegenläufigen Reihen von Schaufeln (22; 24; 122; 124) zwischen der ersten Statorreihe und der zweiten Statorreihe angeordnet sind.

5. Turbomaschine (2; 102) nach einem der Ansprüche 1 bis 4, **dadurch gekennzeichnet, dass** das epizyklische Untersetzungsgetriebe (46; 146; 160) einen Satellitenträger (54; 154) mit einem an dem Stator (36; 136) der Turbomaschine (2; 102) befestigten stromaufwärtigen Teil umfasst, bevorzugt liegt das epizyklische Untersetzungsgetriebe innerhalb der Schaufeln des Verdichterrotors (4; 104).

6. Turbomaschine (2; 102) nach einem der Ansprüche 1 bis 5, **dadurch gekennzeichnet, dass** von den zwei gegenläufigen Reihen von Schaufeln (22; 24; 122; 124) diejenige, die sich stromaufwärts befindet, Schaufeln (22; 122) aufweist, die radial größer als diejenigen stromabwärts (24; 124) sind.

7. Turbomaschine (2; 102) nach einem der Ansprüche 1 bis 6, **dadurch gekennzeichnet, dass** das epizyklische Untersetzungsgetriebe (46; 146; 160) so ausgelegt ist, dass die Reihe von Rotorschaufeln (22; 122) am weitesten stromaufwärts von dem Verdichter (4; 104) die Reihe ist, die sich am langsamsten dreht.

8. Turbomaschine (2; 102) nach einem der Ansprüche 1 bis 7, **dadurch gekennzeichnet, dass** der Rotor (12; 112) eine beschaufelte Rotorscheibe (42; 142) und eine beschaufelte Trommel (44; 144) umfasst, wobei die Rotorscheibe (42; 142) eine Reihe von Schaufeln (22; 122) trägt und die Trommel mindestens zwei Reihen von Schaufeln (24; 26; 124; 126) trägt, wobei die Rotorscheibe (42; 142) und die Trommel (44; 144) jede eine der gegenläufigen Reihen von Schaufeln (22; 24; 122; 124) trägt; bevorzugt ist die Rotorscheibe stromaufwärts von der Trommel angeordnet.

9. Turbomaschine (2; 102) nach Anspruch 8, **dadurch gekennzeichnet, dass** die zwei Reihen von Rotorschaufeln (24; 26; 124; 126), zwischen denen die ringförmige Reihe von Statorschaufeln (30; 130) angeordnet ist, die mindestens zwei Reihen von Schaufeln sind, die von der Trommel (44; 144) getragen werden.

10. Turbomaschine (2; 102) nach einem der Ansprüche 1 bis 9, **dadurch gekennzeichnet, dass** der Verdichter (4; 104) mehrere Reihen von Schaufeln umfasst, wovon eine stromaufwärtige Reihe (28; 128) und eine stromabwärtige Reihe (32; 132) an seinen Enden, die die Reihen von Statorschaufeln sind; wobei der Verdichter ein Niederdruckverdichter sein kann.

11. Turbomaschine (2; 102) nach einem der Ansprüche 1 bis 10, **dadurch gekennzeichnet, dass** der Verdichter mindestens drei Reihen von Rotorschaufeln (22; 24; 26; 122; 124; 126) umfasst, wovon mindestens zwei Reihen (24, 26; 124; 126) aneinander befestigt sind.

12. Turbomaschine (2; 102) nach einem der Ansprüche 1 bis 11, **dadurch gekennzeichnet, dass** sie ein Befestigungsgehäuse (37; 137) für das Gebläse mit mindestens einer, bevorzugt mindestens zwei, Reihen von Gehäusearmen (38; 40), die durch einen primären Strom (18; 118) der Turbomaschine (2; 102) verlaufen, umfasst, wobei der Verdichter stromabwärts von einer der Reihen von Gehäusearmen oder zwischen zwei Reihen von Gehäusearmen angeordnet ist.

13. Turbomaschine (2) nach einem der Ansprüche 1 bis 12, **dadurch gekennzeichnet, dass** das epizyklische Untersetzungsgetriebe (46) ein äußeres Planetenrad (50), woran eine der zwei gegenläufigen Reihen (22) befestigt ist, und ein inneres Planetenrad (48), woran die andere der zwei gegenläufigen Reihen und optional das Gebläse (16) befestigt sind, umfasst.

14. Turbomaschine (102) nach einem der Ansprüche 1 bis 12, **dadurch gekennzeichnet, dass** das epizyklische Untersetzungsgetriebe (146) ein erstes Untersetzungsgetriebe mit einem ersten äußeren Planetenrad (150) ist, wobei die Turbomaschine auch ein zweites epizyklisches Untersetzungsgetriebe (160) mit einem zweiten äußeren Planetenrad (168) umfasst; wobei das Gebläse (116) an dem zweiten äußeren Planetenrad (168) befestigt ist, wobei die eine der zwei gegenläufigen Schaufelreihen (122) an dem ersten äußeren Planetenrad (150) befestigt ist.

15. Turbomaschine (102) nach Anspruch 14, **dadurch gekennzeichnet, dass** die epizyklischen Untersetzungsgetriebe (146; 160) jedes ein inneres Planetenrad (148; 162) und einen Satellitenträger (154; 164) umfassen, wobei die Satellitenträger an dem Stator (137) der Turbomaschine (102) befestigt sind und die inneren Planetenräder (148; 162) miteinander verbunden oder aneinander befestigt sind.

## Claims

1. Axial turbine engine (2; 102) such as a turbojet, comprising a fan (16; 116), a compressor (4; 6; 104) fitted with a rotor (12; 112) with at least two annular rows of rotor vanes (22; 24; 26; 122; 124; 126), of which two rows are contra-rotating (22; 24; 122; 124), an epicyclic reducing gear (46; 146; 160) connecting the fan to the compressor rotor and connecting the contra-rotating rows (22; 24; 122; 124), an annular row of stator vanes (30; 130) arranged between two rows of rotor vanes (24; 26; 124; 126) so as to straighten the flow between the two rows of rotor vanes (24; 26; 124; 126),
**characterized in that**
each rotor vane (22; 24; 26; 122; 124; 126) is connected to the rotor via its inner end.

2. Turbine engine (2; 102) according to claim 1, **characterized in that** the row of stator vanes (30; 130) is arranged downstream of the two contra-rotating rows of rotor vanes (24; 26; 124; 126) which may be two successive rows.

3. Turbine engine (2; 102) according to one of claims 1 to 2, **characterized in that** the epicyclic reducing gear (46; 146; 160) comprises an outer planet wheel (50; 150; 168), an inner planet wheel (48; 148; 162) and a satellite carrier (54; 154; 164) fixed to the stator (36; 136) of the turbine engine, the one of the two contra-rotating rows (22, 122) being fixed to the outer planet wheel (50; 150) and the other of the two contra-rotating rows (24; 124) being fixed to the inner planet wheel (48; 148).

4. Turbine engine (2; 102) according to any of claims 1 to 3, **characterized in that** the row of stator vanes (30; 130) is a first row, the compressor (4; 6; 104) also comprising a second row of stator vanes (28; 128), the contra-rotating rows of vanes (22; 24; 122; 124) being arranged between the first stator row and the second stator row.

5. Turbine engine (2; 102) according to any of claims 1 to 4, **characterized in that** the epicyclic reducing gear (46; 146; 160) comprises a satellite carrier (54; 154) with an upstream portion fixed to the stator (36; 136) of the turbine engine (2; 102), preferably the epicyclic reducing gear lies inside the vanes of the compressor rotor (4; 104).

6. Turbine engine (2; 102) according to any of claims 1 to 5, **characterized in that** of the two contra-rotating rows of vanes (22; 24; 122; 124), that which is upstream has vanes (22; 122) which are larger radially than those downstream (24; 124).

7. Turbine engine (2; 102) according to any of claims 1 to 6, **characterized in that** the epicyclic reducing gear (46; 146; 160) is configured such that the row of rotor vanes (22; 122) furthest upstream of the compressor (4; 104) is the row which turns the slowest.

8. Turbine engine (2; 102) according to any of claims 1 to 7, **characterized in that** the rotor (12; 112) comprises a bladed disc (42; 142) and a bladed drum (44; 144), the disc (42; 142) supporting one row of vanes (22; 122) and the drum supporting at least two rows of vanes (24; 26; 124; 126), the disc (42; 142) and the drum (44; 144) each supporting one of the contra-rotating rows of vanes (22; 24; 122; 124), preferably the disc is arranged upstream of the drum.

9. Turbine engine (2; 102) according to claim 8, **characterized in that** the two rows of rotor vanes (24; 26; 124; 126) between which the annular row of stator vanes (30; 130) is arranged, are the at least two rows of vanes supported by the drum (44; 144).

10. Turbine engine (2; 102) according to any of clams 1 to 9, **characterized in that** the compressor (4; 104) comprises several rows of vanes, of which an upstream row (28; 128) and a downstream row (32; 132) at its ends which are the rows of stator vanes, wherein the compressor may be a low-pressure compressor.

11. Turbine engine (2; 102) according to any of claims 1 to 10, **characterized in that** the compressor comprises at least three rows of rotor vanes (22; 24; 26; 122; 124; 126), of which at least two rows (24; 26; 124; 126) are fixed to each other.

12. Turbine engine (2; 102) according to any of claims 1 to 11, **characterized in that** it comprises a fixing housing (37; 137) for the fan with at least one, preferably at least two rows of housing arms (38; 40) passing through a primary flow (18; 118) of the turbine engine (2; 102), the compressor being arranged downstream of one of the rows of housing arms or between two rows of housing arms.

13. Turbine engine (2) according to any of claims 1 to 12, **characterized in that** the epicyclic reducing gear (46) comprises an outer planet wheel (50) on which one of the two contra-rotating rows (22) is fixed, and an inner planet wheel (48) on which the other of the two contra-rotating rows and optionally the fan (16) are fixed.

14. Turbine engine (102) according to any of claims 1 to 12, **characterized in that** the epicyclic reducing gear (146) is a first reducing gear with a first outer planet wheel (150), the turbine engine also comprising a second epicyclic reducing gear (160) with a second outer planet wheel (168); the fan (116) being fixed to the second outer planet wheel (168), the one of the two contra-rotating vane rows (122) being fixed to the first outer planet wheel (150).

15. Turbine engine (102) according to claim 14, **characterized in that** the epicyclic reducing gears (146; 160) each comprise an inner planet wheel (148; 162) and a satellite carrier (154; 164), the satellite carriers being fixed to the stator (137) of the turbine engine (102), and the inner planet wheels (148; 162) being joined or fixed to each other.
